(19) Europäisches Patentamt
European Patent Office
Office européen des brevets

(11) **EP 4 636 697 A1**

(12) **EUROPEAN PATENT APPLICATION**

(43) Date of publication:
**22.10.2025 Bulletin 2025/43**

(21) Application number: **24315167.7**

(22) Date of filing: **15.04.2024**

(51) International Patent Classification (IPC):
**G06T 9/00** (2006.01)　　**H04N 19/597** (2014.01)

(52) Cooperative Patent Classification (CPC):
**H04N 19/597; G06T 9/001; G06T 9/002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **Sabater, Neus**
　**35830 BETTON (FR)**
• **Chupeau, Bertrand**
　**35700 RENNES (FR)**
• **Schnitzler, Francois**
　**56890 SAINT AVE (FR)**
• **Thudor, Franck**
　**35000 RENNES (FR)**

(74) Representative: **Vossius & Partner Patentanwälte Rechtsanwälte mbB Siebertstraße 3 81675 München (DE)**

(54) **VOLUMETRIC VIDEO ENCODING USING A HYBRID SCHEME TO ADDRESS VIEW-INCONSISTENT SURFACES**

(57)　Apparatuses and methods are disclosed for encoding volumetric video. Techniques disclosed include obtaining views of a scene, classifying the views into view-consistent regions and view-inconsistent regions, and training neural networks, based on the view-inconsistent regions, to determine respective sets of network parameters. Then encoding, into a bitstream, the view-consistent regions and the sets of network parameters representing the view-inconsistent regions. Apparatuses and methods are also disclosed for decoding the volumetric video. Techniques disclosed include decoding, from the bitstream, the view-consistent regions and the sets of network parameters. Then rendering a given view of the scene, including rendering view-inconsistent regions of the view by evaluating the neural networks using the sets of network parameters, and rendering view-consistent regions of the view based on the view-consistent regions.

FIG. 6

**Description**

BACKGROUND

Thanks to advances in volumetric data-capturing and data-rendering technologies, volumetric video is an integral part of applications involving virtual reality (VR), augmented reality (AR), and mixed reality (MR). Recently, encoding volumetric video, described by a multiview video plus depth (MVD) representation of a scene, has been standardized by the MPEG Immersive Video (MIV) standard. To accurately render views of the scene, MIV compliant codecs rely on accurate depth estimation. State of the art depth estimation algorithms, however, cannot reliably estimate the depth of object surfaces with challenging characteristics (e.g., surfaces lacking color consistency or visibility consistency across views). Alternatively, a neural radiance field (NeRF) network can be used to encode volumetric video. An NeRF network, however, needs to be overfitted to the scene it represents, and, therefore, carries a computational burden on the encoder and requires high bandwidth to transmit the network parameters. Hence, a hybrid approach is needed that provides a balance between accurate rendering and reduced complexity.

SUMMARY

Aspects disclosed in the present disclosure describe methods for encoding a volumetric video. The methods comprise obtaining volumetric data associated with a frame of the volumetric video, the volumetric data include views of a scene captured by respective cameras. The methods further comprise classifying the views into view-consistent regions and view-inconsistent regions and training neural networks using respective regions, of the view-inconsistent regions, to determine respective sets of network parameters. Then encoding, into a bitstream, patches containing the view-consistent regions and the sets of network parameters.

Aspects disclosed in the present disclosure also describe methods for decoding a volumetric video. The methods comprise decoding, from a bitstream, patches containing view-consistent regions and sets of network parameters determined by training respective neural networks using respective regions, of view-inconsistent regions. The view-consistent regions and the view-inconsistent regions are regions of views of a scene included in volumetric data associated with a frame of the volumetric video. The methods further comprise rendering a view of the scene, including rendering view-inconsistent regions of the view by evaluating one or more of the neural networks using respective sets of the sets of network parameters, and rendering view-consistent regions of the view based on the patches containing the view-consistent regions.

Aspects disclosed in the present disclosure describe apparatuses for encoding a volumetric video. The apparatuses comprise at least one processor and memory storing instructions. The instructions, when executed by the at least one processor, cause the apparatuses to obtain volumetric data associated with a frame of the volumetric video, the volumetric data include views of a scene captured by respective cameras. The instructions further cause the apparatuses to classify the views into view-consistent regions and view-inconsistent regions and to train neural networks using respective regions, of the view-inconsistent regions, to determine respective sets of network parameters. Then the instructions further cause the apparatuses to encode, into a bitstream, patches containing the view-consistent regions and the sets of network parameters.

Aspects disclosed in the present disclosure also describe apparatuses for decoding a volumetric video. The apparatuses comprise at least one processor and memory storing instructions. The instructions, when executed by the at least one processor, cause the apparatuses to decode, from a bitstream, patches containing view-consistent regions and sets of network parameters determined by training respective neural networks using respective regions, of view-inconsistent regions. The view-consistent regions and the view-inconsistent regions are regions of views of a scene included in volumetric data associated with a frame of the volumetric video. The instructions further cause the apparatuses to render a view of the scene, including rendering view-inconsistent regions of the view by evaluating one or more of the neural networks using respective sets of the sets of network parameters, and rendering view-consistent regions of the view based on the patches containing the view-consistent regions.

Aspects disclosed in the present disclosure describe a non-transitory computer-readable medium comprising instructions executable by at least one processor to perform methods for encoding a volumetric video. The methods comprise obtaining volumetric data associated with a frame of the volumetric video, the volumetric data include views of a scene captured by respective cameras. The methods further comprise classifying the views into view-consistent regions and view-inconsistent regions and training neural networks using respective regions, of the view-inconsistent regions, to determine respective sets of network parameters. Then encoding, into a bitstream, patches containing the view-consistent regions and the sets of network parameters.

Aspects disclosed in the present disclosure also describe a non-transitory computer-readable medium comprising instructions executable by at least one processor to perform methods for decoding a volumetric video. The methods comprise decoding, from a bitstream, patches containing view-consistent regions and sets of network parameters determined by training respective neural networks using respective regions, of view-inconsistent regions. The view-consistent regions and the view-inconsistent regions are regions of views of a scene included in volumetric data associated with a frame of the volumetric video. The methods further comprise rendering a view of the scene, including rendering view-inconsistent regions of the view by evaluating one or more of the neural networks using respective sets of the sets of network parameters, and rendering view-consistent regions of the view based on the patches containing the view-consistent regions.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to aspects of the present disclosure.

FIG. 2 is a diagram illustrating a multiview video plus depth (MVD) representation of a volumetric video, according to aspects of the present disclosure.

FIG. 3 is a block diagram of an example system for encoding a volumetric video, according to aspects of the present disclosure.

FIG. 4 is a block diagram of an example system for decoding a volumetric video, according to aspects of the present disclosure.

FIG. 5 is a diagram illustrating a neural radiance field (NeRF) network, according to aspects of the present disclosure.

FIG. 6 is a block diagram of an example hybrid encoder of a volumetric video, according to aspects of the present disclosure.

FIG. 7 is a block diagram of an example hybrid decoder of a volumetric video, according to aspects of the present disclosure.

FIG. 8 is a block diagram illustrating the operation of a hybrid encoder across frames of a volumetric video, according to aspects of the present disclosure.

FIG. 9 is a flow diagram illustrating an example method for encoding, by a hybrid encoder, a volumetric video, according to aspects of the present disclosure.

FIG. 10 is a flow diagram illustrating an example method for decoding, by a hybrid decoder, a volumetric video, according to aspects of the present disclosure.

DETAILED DESCRIPTION

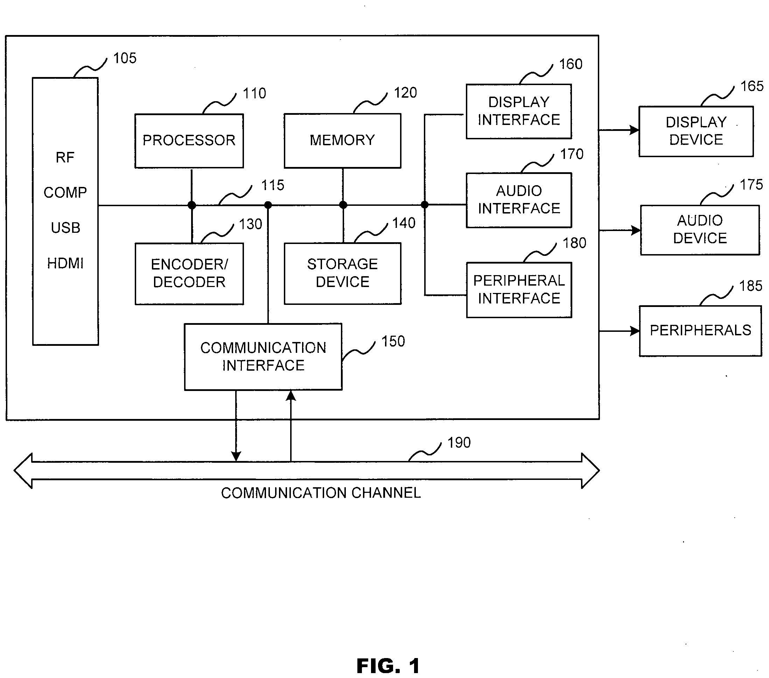

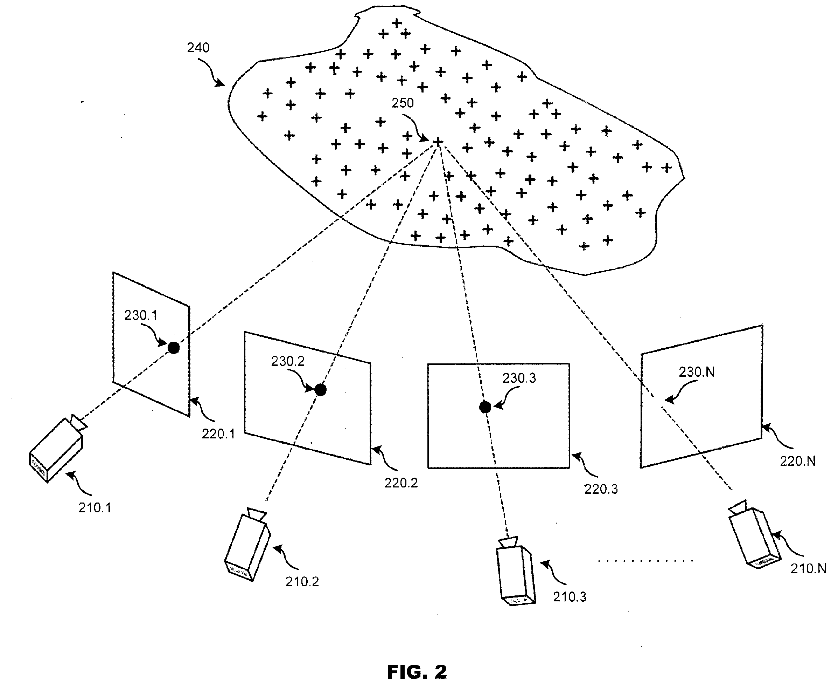

Apparatuses and methods are presented herein for encoding and decoding a volumetric video using a hybrid approach. A system for processing and displaying content, with which various aspects and examples described herein may be implemented, is generally described in reference to FIG. 1, followed by a description of the aspects of the present disclosure in reference to FIGS. 2-10.

FIG. 1 illustrates a block diagram of an example system 100. System 100 can be embodied as a device including the various components described below and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in a single integrated circuit, multiple integrated circuits, and/or discrete components. For example, in at least one embodiment, the processing and encoder/decoder elements of system 100 are distributed across multiple integrated circuits and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120 (e.g., a volatile memory device and/or a non-volatile memory device). System 100 includes a storage device 140, which can include non-volatile memory and/or volatile memory, including, for example, EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 represents module(s) that can be included in a device to perform encoding and/or decoding functions. Additionally, the encoder/decoder module 130 can be implemented as a separate element of system 100 or can be incorporated within processor 110 as a combination of hardware and software as known to those skilled in the art.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes a communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data are streamed to the system 100, in various embodiments, using a Wi-Fi network such as IEEE 802.11. The Wi-Fi signal of these embodiments is received over the communication channel 190 and the communication interface 150 which are adapted for Wi-Fi communications. The communication channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, haptic devices, one or more of a stand-alone DVR, a disk player, a stereo system, a lighting system, and other devices that provide a function based on the output of the system 100. In various embodiments, control signals are communicated between the system 100 and the display device 165, the audio device 175, or other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

The display device 165 and the audio device 175 can alternatively be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

Recent advances in volumetric data-capturing and data-rendering technologies make volumetric video an integral part of VR/AR/MR -based applications. Typically, a volumetric video comprises a sequence of frames, each frame is associated with volumetric data describing objects that form a three-dimensional (3D) scene (also referred to herein as a scene). Such volumetric data can be represented by point cloud(s), mesh(es), or multiple views (i.e., image projections of the scene from different points of view) and corresponding depth maps. The latter, namely, multiview video plus depth (MVD) representation of volumetric video is illustrated in FIG. 2.

FIG. 2 is a diagram illustrating an MVD representation of a volumetric video 200. In the example of FIG. 2, an array of cameras 210.1-N is set to capture a scene, including the shown surface 240 of an object at the scene. The manner in which the scene is projected into a view is defined by the camera's position and orientation relative to the scene (extrinsic parameters) and by the camera's structure and lenses' characteristics (intrinsic parameters), together referred to as camera parameters $\theta_i$. Note that the camera array 210.1-N can be real cameras capturing a natural scene, but also virtual cameras capturing a computer-generated scene. Each camera 210.i operates to capture a corresponding view *i* of the scene - for example, a 3D point on an object's surface 250 is projected onto the image space 220.i of a camera 210.i, forming a pixel 230.i that represents the 3D point 250 at the respective view *i*. The pixels of a view are referred to herein by their coordinate value $(u, v)$ in the image space of the view (note that $(u, v)$ may be non-integer values). Generally, each pixel of a view *i* can be associated with one or more attributes, such as a color value, as denoted by $C_i(u,v)$; and with a depth value, as denoted by $Di(u,v)$. A depth value $D_i(u,v)$ represents the distance between a point at the scene 250 and its projection 230.i at the camera's image plane at pixel location $(u, v)$. Hence, an MVD representation of a volumetric video may include $N$ view streams, respective depth map streams, and a respective metadata stream (including the camera parameters).

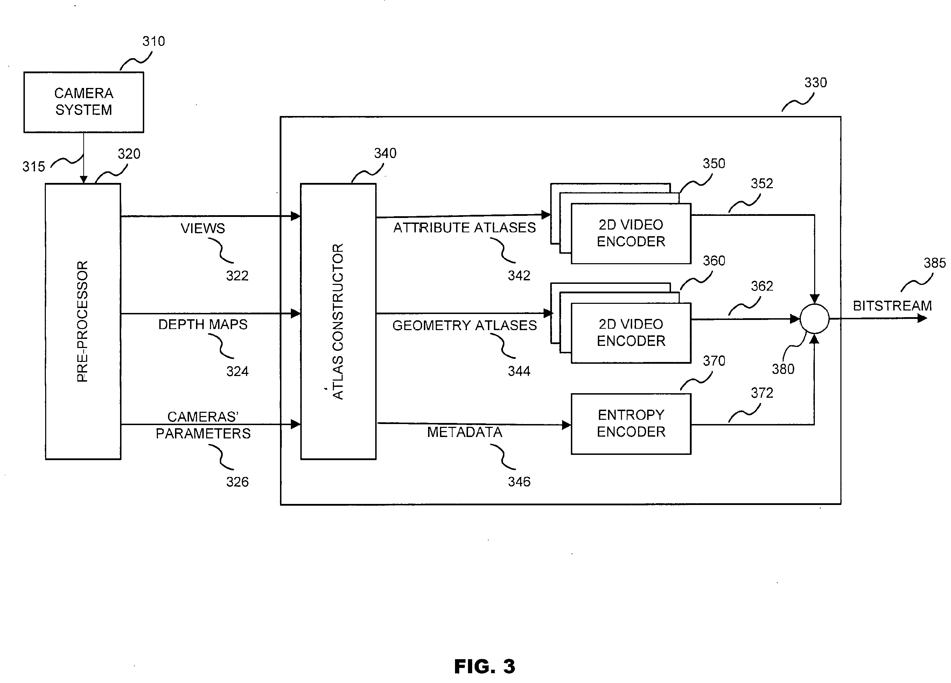

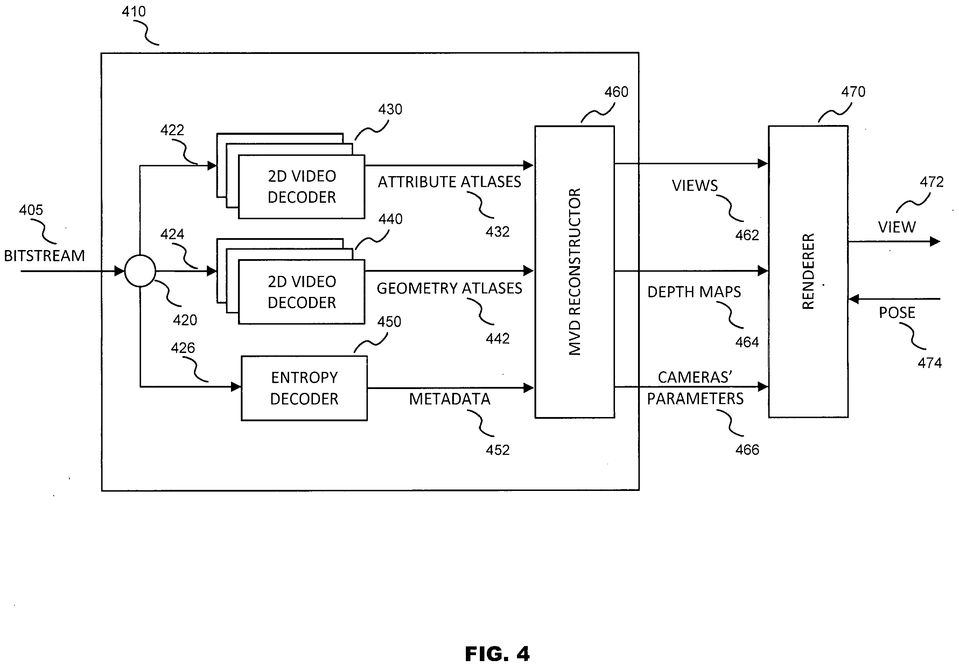

The large amount of data required to represent a volumetric video necessitates efficient compression methods. One approach to encode a volumetric video is by using the MVD representation. 2D video streams, derived from the MVD representation, can then be coded using legacy 2D video encoders (e.g., conforming to coding formats such as AVC, HEVC, or VVC) and the corresponding metadata stream can be entropy encoded. The coded 2D video streams and metadata stream are delivered to a decoder; and the decoded 2D video streams and metadata stream can then be used to reconstruct the MVD representation of the volumetric video. This 2D video compatible approach has been standardized by the MPEG Immersive Video (MIV) standard (see, ISO/IEC 23090-12:2023, "Information technology - Coded representation of immersive media - Part 12: MPEG immersive video). The MIV standard addresses the compression of data describing a (real/virtual) scene, captured by multiple (real/virtual) cameras (for further details, see J. M. Boyce et al., MPEG Immersive Video Coding Standard, Proceedings of the IEEE, vol. 109, no. 9, pp. 1521-1536, Sept. 2021, DOI: 10.1109/JPROC.2021.3062590). Encoding and decoding of volumetric video according. to the MIV standard is generally described herein in reference to FIG. 3 and FIG. 4.

FIG. 3 is a block diagram of an example system 300 for encoding a volumetric video. The system 300 includes a camera system 310, a pre-processor 320, and an encoder 330 (illustrating an MIV compliant encoder). The camera system 310 may represent real cameras (and/or virtual cameras) configured to capture a real-world scene (and/or a computer-generated scene) from multiple points of view, generating respective view streams (e.g., streams of views 220.1-220.N shown in FIG. 2). Image content captured in each of the view streams is a projection of the scene onto the image plane of the respective camera. The camera system 310 may include other sensors configured, for example, to measure depth information for a respective view stream. Data 315 associated with the multiple views, including the captured view streams (and, if available, the measured respective depth information), are fed into the pre-processor 320 together with the cameras' parameters. The preprocessor 320 processes the data associated with the multiple views and generates therefrom respective depth maps. Thus, the pre-processor 320 provides views 322 (the captured view streams) as well as corresponding depth maps 324 and cameras' parameters 326 to the encoder 330 to generate therefrom a bitstream 385 of coded volumetric video data.

The encoder 330 includes an atlas constructor 340 (conforming to the MIV standard), sets of 2D video encoders 350, 360, an entropy encoder 370, and a multiplexer 380. The atlas constructor 340 generates attribute atlases 342 and geometry atlases 344 based on the provided views 322, depth maps 324, and cameras' parameters 326. To that end, attribute patches (containing the image content of the views) and corresponding geometry patches (containing occupancy and depth data) are packed into images, the so-called attribute atlases 342 and geometry atlases 344, respectively. Note that, in the current MIV standard, one view, (e.g., a reference view $r$) is fully encoded and only some patches of the other views (e.g., $i \neq r$) are used to build the atlases. This strategy avoids storing redundant information into the atlases. The atlas constructor 340 also generates metadata 346 (describing the manner in which the atlases 342, 344 were generated and the cameras' parameters 326).

The main goal of the atlas constructor 340 is to generate 2D video data (containing streams of attribute atlases 342 and respective streams of geometry atlases 344) and a corresponding metadata stream 346. These streams 342, 344 can then be encoded by the 2D video encoders 350, 360 (e.g., encoders conforming to the AVC, HEVC or VVC standards), generating therefrom bitstreams 352, 362. Concurrently, the metadata stream 346 can be encoded (e.g., using a coder defined by the MIV standard), generating therefrom a metadata bitstream 372. These bitstreams 352, 362, 372 can then be combined by the multiplexer 380, forming the output bitstream 385. The attribute atlases 342, geometry atlases 344, and the metadata 346, generated by the atlas constructor 340, can be used (at a decoder end) to recover the MVD representation of the scene captured by the camera system 310, as described next in reference to FIG. 4.

FIG. 4 is a block diagram of an example system 400 for decoding a volumetric video. The system 400 includes a decoder 410 (illustrating an MIV compliant decoder) and a renderer 470. The decoder 410 generally reverses the operation of the encoder 330 of FIG. 3. The decoder 410 includes a de-multiplexer 420, sets of 2D video decoders 430, 440, an entropy decoder 450, and a MVD reconstructor 460. The de-multiplexer extracts the bitstreams of coded video data 422, 424 (i.e., 352, 362 of FIG. 3) and the bitstream of the coded metadata 426 (i.e., 372 of FIG. 3) from the received bitstream 405 (i.e., 385 of FIG. 3). The coded video data 422, 424 are then decoded, respectively, by the video decoders 430, 440 (e.g., decoders conforming to the AVC, HEVC or VVC standards), and the coded metadata 426 are decoded by the entropy decoder 450 (e.g., a decoder defined by the MIV standard). Thus, the video decoders 430, 440 decode the attribute atlases 432 and the geometry atlases 442, and the entropy decoder 450 decodes the metadata 452, that are all fed into the MVD reconstructor 460 that recovers therefrom the MVD representation of the volumetric video - that is, the views 462, their respective depth maps 464, and the corresponding cameras' parameters 466. Using the recovered MVD representation 462, 464, 466, the renderer 470 can create immersive content. For example, based on the pose 474 of a viewer (viewing position and orientation), the renderer can provide the viewer with a desired (virtual) view 472 of the scene, that is, an image projection of the scene as would have been captured by a virtual camera having the viewer's pose.

To accurately reconstruct new (virtual) views, MIV compliant codecs rely on the quality sufficiency of the depth maps 324, 464. When the scene is computer-generated, the exact depths of objects at the scene are known, and, therefore, an accurate depth map can be generated for each view. However, when a real scene is captured by real cameras, the depths of objects at the scene need to be estimated, that is, each depth map (of corresponding view) has to be estimated. Depth estimation is known to be an ill-posed problem, and state-of-the-art algorithms, though improved in recent years, are still prone to errors. This is because of color inconsistencies (e.g., due to non-Lambertian surfaces) and visibility inconsistencies (e.g., due to occlusion) across views, as well as repetitive structures and imaging noise that challenge the depth estimation. Hence, MIV compliant codecs may not perform accurate view rendering because the MVD representation they encode may include inaccurate depth maps, particularly, when natural scenes are represented by the MVD representation. In such situations, the rendered views may have artifacts in regions where the depths have incorrectly been estimated.

Furthermore, even when accurate depth maps can be estimated, the coding format as specified by the current version of the MIV standard is not able to handle specular reflections and other complex light effects since it assumes that the scene is composed of Lambertian surfaces, that is, surfaces with diffuse (i.e., Lambertian) reflection only. In fact, in the second version of the MIV standard (not yet released), while assuming that the input depth maps are accurate, attempts are made to improve the encoding and rendering of views of the scene that contain specular surfaces and transparent objects. However, if a specular reflection is captured by one camera (that captures the scene from a respective viewpoint) then rendering the scene from a different virtual viewpoint (that is, generating a virtual view) requires modifying the appearance of the reflected content in the virtual view. Yet, there is no information transmitted in the attribute atlases 432, the geometry atlases 442, or the metadata 452 that can be used to perform that. Moreover, when a virtual view is generated from several views 462, the image projections of a given object may be mapped from these views to the virtual view at different positions (due to the inaccuracy of respective depth maps 464), and, therefore, replications of the object may be observed in the rendered virtual view. This is a significant limitation of MIV compliant codecs, as non-Lambertian materials are commonly observed in many scenes (e.g., highly reflective surfaces such as mirrors or transparent surfaces such as glass or smooth metal).

A partial solution may be by "baking" the light effects, that is selecting one of the input views (typically a central view covering a major part of the scene) to convey the viewpoint dependent light effect (see, J. Fleureau et al., "CE2.6-related: Non-Lambertian Light Effect Baking," MPEG doc. m52415 ISO/IEC JTC1/SC29/WG11, January 2020, referred to herein as "Fleureau"). In Fleureau, at the rendering stage, instead of blending patches originating from different views, only patches from a selected (main) view are used, when available. Doing so, the light effects are "baked" and do not change with the viewing position, preventing flickering artifacts. This solution results in a visually stable rendered content, though not realistic with respect to specular light effects.

Another solution to handle non-diffuse (i.e., non-Lambertian) surfaces is to transmit multiple, view-dependent, textures per surface patch (D. Naik, et al., "Surface lightfield support in video-based point cloud Coding", IEEE 22nd International Workshop on Multimedia Signal Processing, September 2020, pp. 1-6, referred to herein as "Naik"). In Naik, up to 5 representative textures per patch are chosen from among 13 cameras and are used to handle non-Lambertian surfaces. The obvious drawbacks of this approach are the increases in pixel-rate and in bitrate, which rapidly become prohibitive.

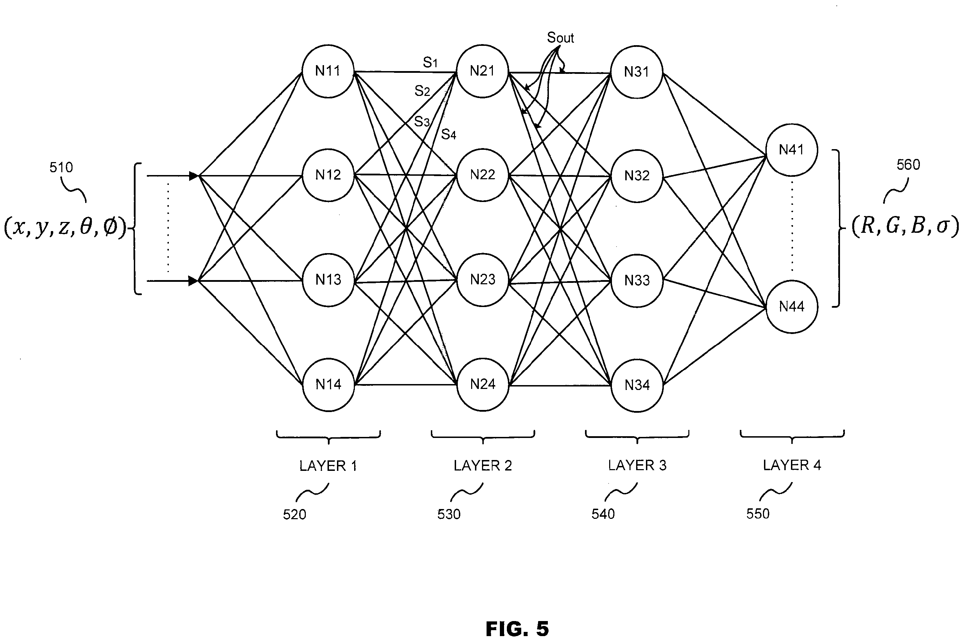

A recent development in AI-based rendering technologies introduces the application of a neural radiance field (NeRF) network (see, B. Mildenhall, et al., "NeRF: representing scenes as neural radiance fields for view synthesis," Communications of the ACM, Vol. 65, No. 117, December 2021, pp 99-106, referred to herein as "Mildenhall"). An NeRF network can be used for synthesizing new views of a complex 3D scene by leveraging a fully connected neural network, such as the multilayer perceptron illustrated by FIG. 5. As described in Mildenhall, the parameters of an NeRF network are learned from multiple views of the scene. This network can be queried with respect to a point at the scene, $x = (x, y, z)$ viewed from a direction $(\theta, \varnothing)$, that can also be expressed by a 3D Cartesian unit vector d. The network outputs the density $\sigma$ and the RGB color at that point x. At the rendering stage, a view with a direction $d$ can be generated by evaluating the color $C(u, v, d)$ of each pixel at location $(u, v)$ along a ray extending from the camera center, passing through the pixel, and further traveling through the scene, as formulated below:

$$C_\omega(u, v, d) = \int_{t_s}^{t_e} T(t) \; \sigma_\omega\big(r(t)\big) c_\omega(r(t), d) dt, \tag{1}$$

$$r(t) = t_s + td, \tag{2}$$

$$T(t) = -\exp\left(\int_{t_s}^{t} \sigma_\omega\big(r(s)\big) ds \right), \tag{3}$$

where $\{\omega\}$ denotes the learned parameters of the network; where the color $c_\omega$ and the density $\sigma_\omega$ are evaluated along a ray $r$ $(t) = t_s + td,$ starting at $t_s$ and ending at $t_e,$ having a direction d; and where $T(t)$ represents the probability that the ray travels from $t_s$ to t without hitting any particle. In practice, a 2D view is rendered by approximating these integrals.

FIG. 5 is a diagram illustrating an NeRF network 500. As illustrated, the NeRF network is a neural network composed of multiple layers, each layer includes multiple nodes (denoted by circles). Generally, the architecture of a neural network is characterized by the number of layers, the number nodes in each layer, and by the manner in which the layers' nodes are connected. In the example of FIG. 5, the network 500 has four layers 520, 530, 540, 550 that are fully connected. For example, the first layer 520 includes four nodes N11, N12, N13, and N14 that each receives the input $(x, y, z, \theta, \varnothing)$ 510 and each outputs an output signal that, in turn, feeds the nodes of the next layer, N21, N22, N23, and N24. Likewise, the second layer 530 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 550 includes four nodes N41 to N44, that each receives the output signals of the nodes from the previous layer, N31, N32, N33, N34 and respectively provides the network output, $(R, G, B, \sigma)$ 560. In an aspect, the network may be trained to provide other color models, such as $(y, u, v, \sigma)$.

Each node in the network 500 represents an operator that generates an output signal based on the node's inputs. For example, node N21 of the second layer 530 receives as an input the output signals of nodes N11, N12, N13, and N14, respectively, $s_1$, $s_2$, $s_3$, and $s_4$. These inputs are translated into an output signal $s_{out}$ that feeds the nodes of the third layer 540. A node's operator can be expressed as follows:

$$s_{out} = A(p_0 + \sum_{i=1}^{L} p_i \cdot s_i), \qquad (4)$$

where, $L$ denotes the number of input signals (i.e., the number of nodes from the previous layer that connect to the node), $s = \{s, : i = 1 \ to \ L\}$ denotes the node's input signal vector, $s_{out}$ denotes the node's output signal, $p = \{p_i : i = 0 \ to \ L\}$ denotes the node's parameter vector (or weight vector), and $A$ denotes an activation function (e.g., ReLU, Sigmoid, or Tanh). The weight vectors (and parameters of the activation functions, if such parameters exist) of respective nodes are collectively referred to as the network parameters, denoted by $\{\omega\}$. These network parameters, $\{\omega\}$, are determined through a training process and used in the inference (rendering) stage as demonstrated by equations (1)-(3).

Generally, network parameters $\{\omega\}$ of a neural network are determined through a training process. The training process involves the learning of the relations between the network's inputs and the network's output 560 through the minimization of a loss function. For example, the following loss function can be used:

$$L(\omega) = \sum_{i=1}^{N} \frac{1}{M} \sum_{(u,v) \in C_i} (C_i(u, v) - C_\omega(u, v, d))^2 , \qquad (5)$$

where $C_i(u, v)$ is a ground truth view; where $C_\omega(u, v, d)$ is a synthesized view that can be generated according to equations (1)-(3) using the direction $d$ of the ground truth view for each pixel $(u, v)$ and for the network parameters $\{\omega\}$; and where M denotes the number of pixels in the view and $N$ denotes the number of views. The minimization of the loss function is typically performed by a machine learning optimization algorithm such as a batch gradient descent algorithm, but any optimization algorithm can be used.

The NeRF network offers an attractive solution for the rendering of 3D scenes including objects with challenging characteristics - such as, very thin objects, objects with semi-transparent surfaces, occluded (or self-occluding) object regions, and/or objects with non-Lambertian surfaces. Surface regions having such characteristics tend to be view-inconsistent - that is, light radiates from these surface regions is differently observed (or captured) from different points of view (or otherwise occluded). Accurate estimation of the depth is not feasible for surface regions that are view-inconsistent, therefore, encoding these regions with MIV compliant codec may not lead to an acceptable rendering quality. The representation of view-inconsistent surface regions can be addressed by the NeRF network by specifically learning the characteristics of these regions, that is, learning the changing appearance of view-inconsistent surface regions when projected from different points of view. However, to represent a scene, the NeRF network needs to be trained based on views of that scene, thus, for each scene a set of network parameters $\{\omega\}$ needs to be estimated through re-training the network. Overfitting a network in this manner for each scene creates a computational burden on the encoder and requires high bandwidth (or storage) to transmit (or store) the network parameters.

Yet, typically, only a small portion of a 3D scene contains surface regions that are view-inconsistent (for which employing an NeRF network may be needed), and so, a hybrid scheme for encoding a volumetric video is disclosed herein. According to aspects, such a hybrid scheme combines the application of an MIV compliant codec 300, 400 and of NeRF network(s) 500. In this hybrid scheme, one or more NeRF networks can be employed to target only those surface regions at the scene that benefit from their application, and since these surface regions represent only a small part of the scene, the overall increase in encoding complexity and bandwidth requirement will be tolerable (relative to using NeRF network(s) to represent the whole scene). That being said, combining NeRF network(s) with an MIV compliant codec is not straightforward.

An early hybrid scheme was introduced in EP Patent Application No. 23306419.5, filed on August 25, 2023, titled "Hybrid Volumetric Video Encoding with Implicit Neural Video Representations to Handle Non-Lambertian Surfaces," the reference of which is incorporated herein by its entirety. An improved hybrid scheme is presented herein where: 1) not only non-Lambertian surface regions are targeted by the NeRF network(s), but any view-inconsistent surface regions for which accurate estimation of the depth is not feasible; 2) to reduce complexity, multiple NeRF networks are trained and applied, each of which with respect to a different volumetric partition of the scene; and 3) temporal redundancy of the volumetric video is leveraged to decrease computational complexity and the coding bitrate of the NeRF networks' parameters.

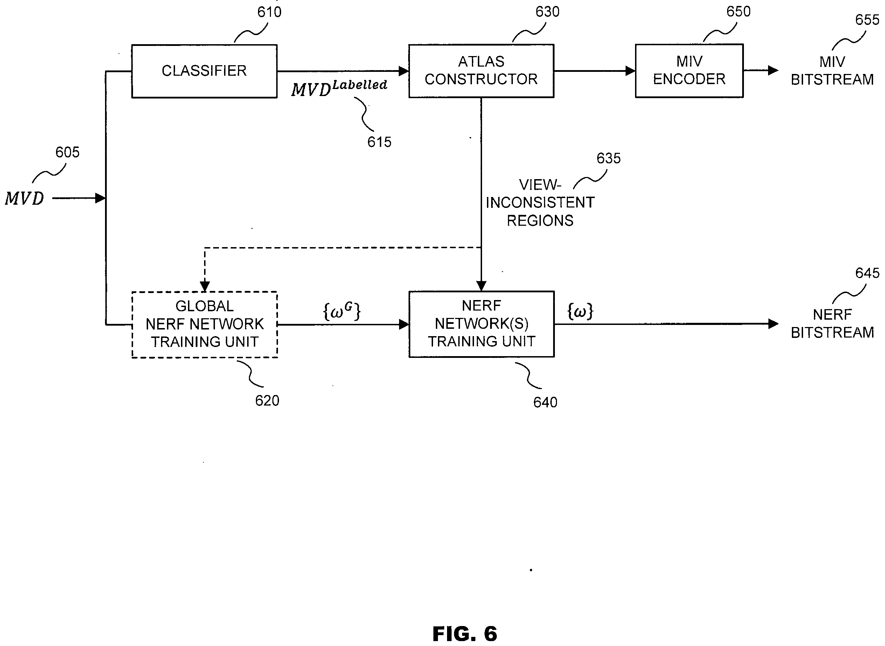

FIG. 6 is a block diagram of an example hybrid encoder of a volumetric video 600. The hybrid encoder 600 includes a classifier 610, an atlas constructor 630 (e.g., the atlas constructor 340 of FIG. 3), an MIV encoder 650 (e.g., the encoders 350, 360, and 370 of FIG. 3), (optionally) a global network training unit 620, and an NeRF network(s) training unit 640. The hybrid encoder 600 is fed with an MVD representation 605 of a volumetric video capturing a (real or virtual) scene. In this presentation, for each frame of the volumetric video, N views may be provided, where each view $C_i$ is associated with a corresponding depth map $D_i$ and camera parameters $\theta_i$. That is, the input MVD representation 605 may include a set of $\{(C_i, D_i, \theta_i) \; \forall \; i = 1: N\}$ for each frame of the volumetric video. The hybrid encoder 600 generates an MIV bitstream 655 conforming to the MIV standard. The hybrid encoder 600 also generates an NeRF bitstream 645 containing coded sets of network parameters, $\{\omega\}$, for each of the trained 640 NeRF networks (as well as any other information defining each of the NeRF networks, such as, a network architecture and/or any non-trainable parameters). In an aspect, each NeRF network is trained to represent a volumetric region of the scene including view-inconsistent surfaces. Thus, the locations of these volumetric regions may also be encoded into the NeRF bitstream 645. The operation of the hybrid encoder is further described below.

The classifier 610 obtains as an input an MVD representation 605 of the volumetric video and generates therefrom a labelled representation. To that end, the classifier 610 classifies surface regions of objects at the scene as either view-consistent regions or view-inconsistent regions. Accordingly, object surface regions projected into the given views, $C_{i=1:N}$, are labelled as either view-consistent regions or view-inconsistent regions. The labelled views, together with the depth maps and cameras' parameters, collectively denoted MVD$^{Labelled}$615, are then provided to the atlas constructor 630. The following approaches can be used to perform such classifications.

In a first approach, since current depth estimation algorithms yield erroneous depth estimates for regions that are view-inconsistent, a confidence map $M_i$ (often provided by the depth estimation algorithm) can be used. Such a confidence map provides a confidence value $M_i(u,v)$ for a depth estimate $D_i(u,v)$ of a pixel $(u, v)$ of view $i$. For example, a confidence value's range of 0 to 1 can be used; the more likely the estimate $D_i(u,v)$ is to being accurate, the closer $M_i(u,v)$ is to 1, and the more likely the estimate $D_i(u,v)$ is to being erroneous, the closer $M_i(u, v)$ is to 0. A confidence value threshold, $\varepsilon$, can be used to classify the pixels of each view. Pixels that are likely to have accurate depth estimate (for which $M_i(u, v) > \varepsilon$) will be labelled as view-consistent pixels, while the remaining pixels (for which $M_i(u, v) \leq \varepsilon$ ) will be labelled view-inconsistent pixels. In an aspect, pixels within a neighborhood that includes pixels that are labelled as view-inconsistent pixels can be merged into a view-inconsistent surface region.

In a second approach, view-inconsistent regions can be identified directly because, for these regions, corresponding regions in other views are not similar in appearance. As illustrated in FIG. 2, the 3D-point 250 is projected into corresponding image pixels 230.1-N. In this example, these corresponding pixels 230.1-N do not have a similar appearance (as illustrated by the black, grey, and white colors). In this case, these pixels are labelled as view-inconsistent pixels. Formally, if a pixel $(u, v)$ in a reference view $r$ has a corresponding pixel $(u', v')$ in another view $r'$ such that the difference in appearance (e.g., color intensity) is smaller than (or equal to) a threshold, then that pixel is labelled as a view-consistent pixel; otherwise, it is labelled as a view-inconsistent pixel. In the case where the appearance of the pixels is represented by their color, then when $|C_r(u, v) - C_{r'} (u', v')| \leq \gamma$, the *pixel* $(u, v)$ is labelled as a view-consistent pixel; otherwise, it is labelled as a view-inconsistent pixel.

Generally, finding correspondence between a pixel from a reference view and a pixel from another view can be performed based on the views' camera models (parameters) and based on the reference view depth map, as follows. First, a pixel $(u, v)$ from a reference view $r$ (e.g., 230.2) is mapped to a 3D point at the scene (e.g., 250) that the pixel is the image projection of. This is done based on the camera model $\theta_r$ of the reference view and the depth $D_r(u, v)$ of the pixel. Second, to obtain the corresponding pixel $(u', v')$, the point at the scene (e.g., 250) is projected into the image space of the other view $r'$ (e.g., 230.3). This is done based on the camera model $\theta_{r'}$ of that view. Then, given the corresponding pixels $(u, v)$ and $(u', v')$, a distance (or a similarity) metric can be computed. For example, the absolute distance between these pixels' color, $Dist = |C_r(u, v) - C_r(u', v')|$, can be computed. To determine view-consistency, the metric is compared against a threshold $\gamma$. if $Dist > \gamma$, the pixel $(u, v)$ is labelled as view-inconsistent. On the other hand, if $Dist \leq \gamma$, the pixel is labelled as view-consistent. The distance (or similarity) metric can be computed with respect to the corresponding pixels (as shown above) or, to avoid error due to image noise, with respect to the pixel neighborhoods of the corresponding pixels $(u, v)$ and $(u', v')$.

Note that in the case where a pixel is found to be view-inconsistent, it may be that the depth estimate $D_r(u, v)$ (used in obtaining the correspondence) is the source of the view inconsistency (assuming that the camera models are accurate). Indeed, correspondence between pixels is hard to establish when the pixels are a projection of a 3D point that is on an object surface with challenging characteristics - such as, very thin objects, objects with semi-transparent surfaces, occluded (or self-occluding) object regions, and/or objects with non-Lambertian surfaces. As an alternative, correspondence between pixels can be established using a homography matrix, defined by the parameters of the two views' cameras; in which case, corresponding pixels that are not similar in appearance, $Dist > \gamma$, can be labelled as view-inconsistent.

Following the classification, view-consistent regions from views associated with each frame of the volumetric video can be encoded with an encoder conforming to the MIV standard. To that end, the atlas constructor 630 receives the labelled MVD representation and generates therefrom atlases and metadata, as explained with respect to the atlas constructor 340 of FIG. 3. The atlases and the metadata are then encoded by the MIV encoder 650, as explained with respect to the encoders 350, 360, 370 of FIG. 3. Thus, patches are formed based on the view-consistent regions (that is, regions of respective views that were formed by pixels labelled as view-consistent by the classifier 610) and are packed into atlases that together with corresponding metadata are encoded 650 into the MIV bitstream 655 (e.g., bitstream 385).

In an aspect, also the view-inconsistent regions (that is, regions of respective views that were formed by pixels labelled as view-inconsistent by the classifier 610) may be processed by the atlas constructor 630 and the MIV encoder 650 to ensure retro-compatibility by way of MIV encoding of the whole scene. In this aspect, the patches in the atlases that correspond to view-inconsistent regions are labelled as such and need not be decoded from the MIV bitstream 655 when hybrid coding is employed. Note that the MIV standard specifies ancillary patches that are not intended to be used for rendering. These are grouped into a dedicated atlas, namely, an ancillary atlas, that is indicated by setting a flag to 1 (i.e., the asme_ancillary_atlas_flag defined in the atlas sequence parameter set). Such an ancillary atlas can be used to transport ancillary patches that are labelled as including view-inconsistent regions. According to aspects, these ancillary patches may not be used for rendering 750, and, instead, the view-inconsistent regions 635 they include will be used to train the NeRF networks, as explained below.

As mentioned above, each NeRF network may be trained to represent a respective volumetric region of the scene that includes view-inconsistent surfaces. And so, the locations of these volumetric regions at the scene may be encoded into the NeRF bitstream 645. Alternatively, ancillary patches, encoded into the MIV bitstream 655, can be used to obtain these locations. In such a case, these locations need not be encoded into the NeRF bitstream 645. For example, an ancillary patch of a specific type can be used to encode a bounding box enclosing a volumetric region of the scene that includes view-inconsistent surfaces (for which a corresponding NeRF network is trained). As another example, ancillary patches containing respective view-inconsistent regions (e.g., used to provide retro-compatibility as described above) can be used to recover a location of a volumetric region at the scene (for which a corresponding NeRF network is trained). This may involve comparing the shape, size, and depth of these ancillary patches to non-ancillary patches to detect whether these ancillary patches are occluded or not. Regions that are occluded (not visible) are identified as view-inconsistent regions.

Concurrently with the MIV based encoding 630, 650 of view-consistent regions, encoding of view-inconsistent regions is performed by NeRF networks. The operation of an NeRF network is generally described herein in reference to FIG. 5. Any variant of such an NeRF network can be used to represent the view-inconsistent regions. The network model (that is, the network parameters $\{\omega\}$) of each NeRF network is obtained through a training process, based on the view-inconsistent regions, by minimizing a loss function. For example, the following loss function can be used:

$$L(\omega) = \sum_{i=1}^{N} \frac{1}{|C_i^I|} \sum_{(u,v) \in C_i^I} (C_i(u, v) - C_\omega(u, v, d))^2 + \lambda R(\omega), \qquad (6)$$

where $C_i(u, v)$ is a ground truth view; where $C_\omega(u, v, d)$ is a synthesized view that can be generated according to equations (1)-(3) using the direction d of the ground truth view for each pixel $(u, v)$ and for network parameters $\{\omega\}$; where $R$ is the bitrate of the (entropy) encoded parameters $\{\omega\}$; where $C_i^I$ and $|C_i^I|$ respectively denote the view-inconsistent pixels in view $C_i$ and the number of such pixels; where N denotes the number of views; and where $\lambda$ is a trade-off parameter between the fidelity (first) term and the regularity (second) term. The minimization of the loss function is typically performed by a machine learning optimization algorithm such as a batch gradient descent algorithm, but any optimization algorithm can be used. Other loss functions may be used; for example, using a different distortion metric in the first term and/or using other terms to induce some properties in the parameters such as sparsity (with or without the regularity term).

According to aspects, the representation of the view-inconsistent regions 635 may be carried out by one or more NeRF networks, the models of which may be initially determined by a 'global' model of a global NeRF network. That is, a global NeRF network may be trained 620, and the resulting global model can be refined by other, locally trained 640, NeRF network(s), obtaining local models that can be used to represent respective view-inconsistent surface regions. For example, a global NeRF network can be trained 620 based on (all or a representative part of) the input views 605, including the set $\{(C_i, D_i, \theta_i) \forall i = 1: N\}$. Alternatively, or in addition, the global NeRF network can be trained 620 based on (all or a representative part of) view-inconsistent regions 635 (as indicated by the dashed-arrow in FIG. 6). The resulting network parameters $\{\omega^G\}$ can be used to initialize the network parameters $\{\omega\}$ of each one of the NeRF networks. Using the network parameters $\{\omega^G\}$ obtained for the global NeRF network to initialize the training 640 of the other NeRF networks can improve spatial consistency across the models obtained for these networks. However, in an aspect, the global NeRF network 620 need not be used, and the NeRF networks can be independently trained 640 as described below.

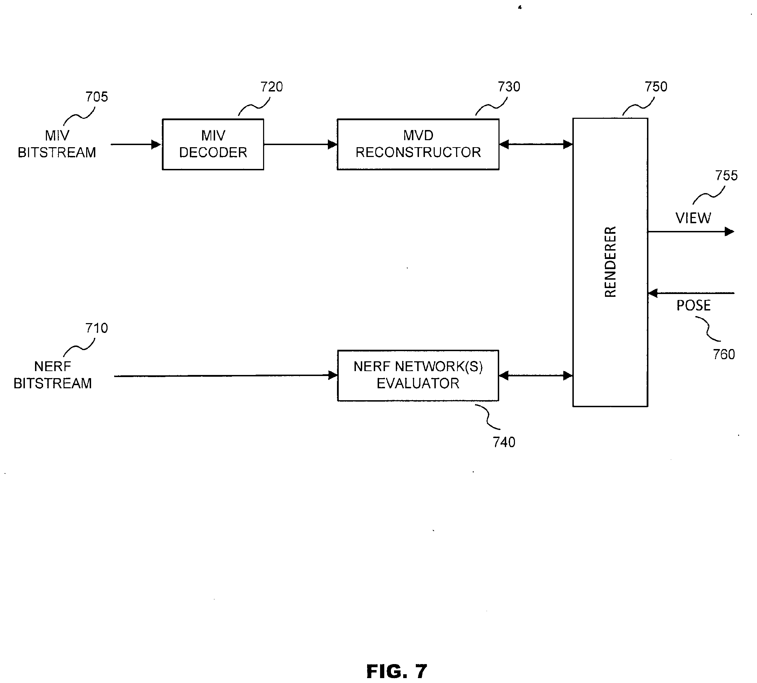

According to aspects, the NeRF network(s) can be locally trained 640. To that end, the scene can be subdivided into volumetric partitions using for example an octree (or any other method of partition), and respective NeRF networks can be trained 640 to represent those partitions that are view-inconsistent partitions, where a view-inconsistent partition includes one or more view-inconsistent surface regions. For example, if the number of view-inconsistent pixels, projected from a volumetric partition, is above a threshold, that partition can be determined as a view-inconsistent partition. Representing view-inconsistent partitions by respective NeRF networks allows for parallel decoding and rendering based on these networks, enabling overall real-time decoding and rendering of the volumetric video. The decoding and rendering of the volumetric video are next described in reference to FIG. 7.

FIG. 7 is a block diagram of an example hybrid decoder of a volumetric video 700. The hybrid decoder 700 includes an MIV decoder 720, an MVD reconstructor 730, an NeRF network(s) evaluator 740, and a renderer 750. The MIV decoder 720 decodes the MIV bitstream 705, 655 (provided by the MIV encoder 650), extracting therefrom the atlases and corresponding metadata (generated by the atlas constructor 630) for views associated with each frame of the volumetric video. Then, the MVD reconstructor 730 reconstructs the MVD representation of the volumetric video from patches extracted from the decoded atlases, based on the decoded corresponding metadata. In an aspect, only view-consistent patches (or atlases) are decoded 720 and used 730 for the reconstruction of the MVD representation.

Concurrently, the NeRF network(s) evaluator 740 decodes from the NeRF bitstream 645, 710 the set of network parameters $\{\omega\}$ for each of the NeRF network(s) and uses these parameters for network inferences. The locations at the scene of volumetric regions that can be represented by respective NeRF networks can be decoded from the NeRF bitstream 645, 710 or can be derived from ancillary patches (or atlases) decoded from the MIV bitstream 655, 705. Hence, to render a pixel projected from a volumetric region for which a respective NeRF network was trained, that NeRF network can be evaluated using its respective set of network parameters $\{\omega\}$. In an aspect, the NeRF network(s) evaluator 740 is configured to perform inferences using each one of the NeRF networks that were locally trained 640 based on view-inconsistent regions projected from respective volumetric partitions of the scene. In another aspect, the NeRF network(s) evaluator 740 is configured to perform inferences using a global NeRF network that was trained 620 based on view-inconsistent regions projected from the scene.

The renderer 750 is configured to render a desired view 755 of the scene captured by the volumetric video. The direction of the desired view 755 can be determined, for example, by a viewer's pose 760. Thus, according to aspects, given a desired view, view-inconsistent regions of the view can be rendered by evaluating 740 respective NeRF networks, while view-consistent regions of the view can be rendered based on spatially related views reconstructed 730 based on patches containing view-consistent regions. Thus, for example, to render a given view, the renderer 750 may request the MVD reconstructor 730 spatially related views. In response, the MVD reconstructor may access patches containing view-consistent regions and may generate therefrom the requested views. Based on these views the renderer may render the view-consistent regions of the given view. To render the remaining (view-inconsistent) regions of the given view, the renderer may request the evaluator 740 to synthesize these regions. Based on these regions' locations, the evaluator employs the respective NeRF networks to generate the respective color values. Accordingly, for a given view, the rendering of a view-inconsistent pixel $(u, v)$ includes evaluating the color $C_{\omega}(u, v, d)$ along a ray originating from the center of the camera of the given view, passing the camera image space at the pixel location $(u, v)$, and traveling through the 3D scene, as formulated by equations (1)-(3), for example.

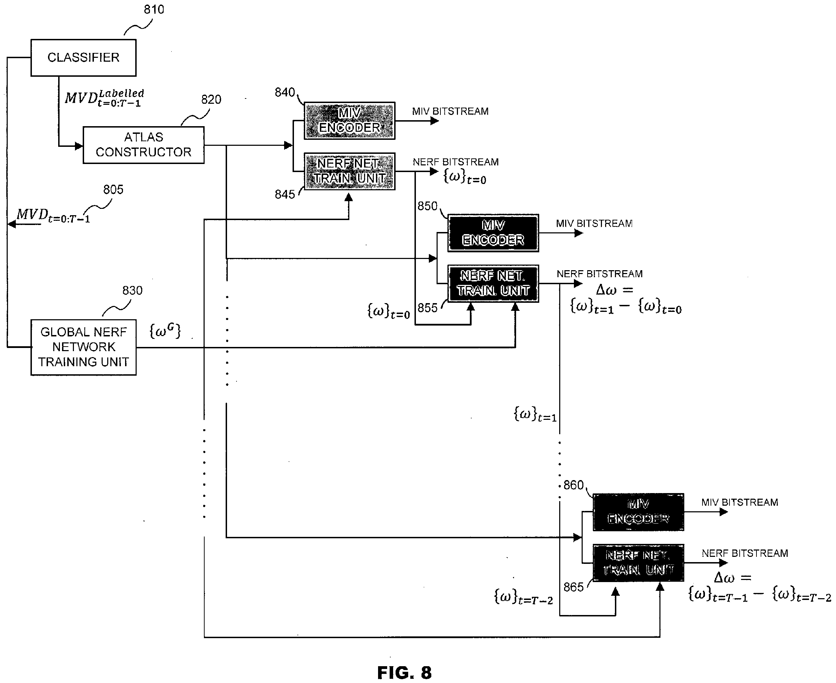

The temporal redundancy of the MVD representation is leveraged by encoders conforming to the MIV standard, where atlases are constructed for each group of pictures (GoP). This temporal redundancy can also be leveraged by the hybrid encoder 600, as further described in reference to FIG. 8.

FIG. 8 is a block diagram illustrating the operation of a hybrid encoder across frames of a volumetric video 800. In the example of FIG. 8, the operation of the hybrid encoder is illustrated with respect to an input MVD representation 805 associated with T frames of a GoP that are captured from time $t = 0$ to time $t = T - 1$, that is, $MVD_{t=0:T-1} = \{(C_i, D_i, \theta_i) \, \forall \, i = 1: N\}_{t=0:T-1}$. As illustrated, a classifier 810, an atlas constructor 820, and a global NeRF network training unit 830 operate on views associated with the T frames of the GoP. Hence, regions are labelled as view-inconsistent and view-consistent, by the classifier 810, for views associated with the T frames of the GoP, that is $MVD_{t=0:T-1}^{Labelled}$. Based on this labelling, atlases and corresponding metadata are constructed by the atlas constructor 820 for the T frames of the GoP; these atlases include patches for view-consistent regions and (optionally) ancillary patches for view-inconsistent regions. In addition, a global NeRF network may be trained by the training unit 830, based on views associated with the T frames of the GoP, determining global network parameters $\{\omega^G\}$. Then, an MIV encoder and an NeRF network(s) training unit (denoted by the gray blocks) are employed (as described in reference to FIG. 6) to encode the labelled MVD overtime, (optionally) using the global network parameters $\{\omega^G\}$ to initialize the training of the NeRF network(s), as follows. At time $t = 0$, the MIV encoder 840 operates on view-consistent regions and the NeRF network(s) training unit 845 operates on view-inconsistent regions, both types of regions are labelled regions from views in $MVD_{t=0}^{Labelled}$. At time t=1, the MIV encoder 850 operates on view-consistent regions and the NeRF network(s) training unit 855 operates on view-inconsistent regions, both types of regions are labelled regions from views in $MVD_{t=1}^{Labelled}$. And, at time t=T-1, the MIV encoder 860 operates on view-consistent regions and the NeRF network(s) training unit 865 operates on view-inconsistent regions, both types of regions are labelled regions from views in $MVD_{t=T-1}^{Labelled}$ .

In an aspect, the NeRF network(s) training unit 845, 855, 865 encodes the parameters $\{\omega\}$ incrementally (relative to the parameters $\{\omega\}$ obtained for the previous frame of the GoP). Thus, for the first frame in the GoP, at $t = 0$, the parameters $\{\omega\}_{t=0}$ are encoded into the NeRF bitstream. For the second frame of the GoP, at $t = 1$, the differences between parameters $\{\omega\}_{t=1}$ and parameters $\{\omega\}_{t=0}$ (that is, $\Delta\omega = \{\omega\}_{t=1} - \{\omega\}_{t=0}$) are encoded into the NeRF bitstream, and so on.

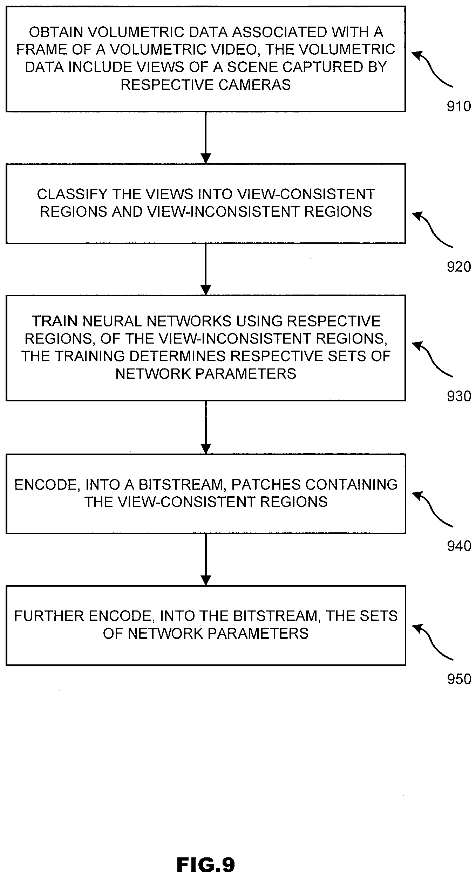

FIG. 9 is a flow diagram illustrating an example method for encoding, by a hybrid encoder, a volumetric video 900, according to aspects of the present disclosure. The method 900 begins, in step 910, by obtaining volumetric data associated with a frame of the volumetric video. The volumetric data include views of a scene captured by respective cameras (e.g., as demonstrated with respect to FIG. 2). In step 920, the views are classified into view-consistent regions and view-inconsistent regions (e.g., by the classifier 610). As explained herein, the classification of a pixel from one view can be performed by finding a corresponding pixel from another view and then classifying the pixel as a view-inconsistent pixel if a difference between an attribute value of the pixel and an attribute value of the corresponding pixel is above a predetermined threshold.

Next, in step 930, neural network(s) are trained using respective regions of the view-inconsistent regions; the training determines respective sets of network parameters (e.g., by the training unit 640). These networks are trained to estimate an attribute of a pixel (e.g., color value) evaluated along a camera ray crossing the pixel (e.g., as described with respect to FIG. 5). In an aspect, the scene can be partitioned into volumetric partitions; in which case, view-inconsistent regions, used to train a respective neural network, may be projected from a respective partition of these volumetric partitions.

Then, in step 940, patches (e.g., generated by the atlas constructor 630) that contain the view-consistent regions are encoded (e.g., by the MIV encoder 650) into a bitstream. In an aspect, the view-inconsistent regions are packed (e.g., by the atlas constructor 630) into ancillary patches that are also encoded (e.g., by the MIV encoder 650), into the bitstream. In this case, the ancillary patches, when decoded (e.g., by the MIV decoder 720), can be used to identify locations at the scene associated with the view-inconsistent regions. In step 950, the sets of network parameters of the neural networks are further encoded into the bitstream (e.g., by the training unit 640). In an aspect, locations at the scene associated with the view-inconsistent regions are also encoded into the bitstream.

In an aspect, the method 900 can be applied to also train a global neural network, determining global network parameters for this network (e.g., by the training unit 620). The training of this global neural network can be based on the view-consistent regions, or the view-inconsistent regions, or a combination thereof. The training 620 determines global network parameters that can be used during the training 640 of the neural networks to initialize the respective sets of network parameters.

To reduce the bitrate used to encode the sets of network parameters (as illustrated in FIG. 8), in an aspect, the steps 910-940 of method 900 can be further performed with respect to a subsequent frame of the volumetric video, including the determining of subsequent sets of network parameters. Then, in step 950, differences between respective parameters in the sets of network parameters (determined for the current frame) and in the subsequent sets of network parameters can be encoded into the bitstream. Furthermore, to leverage temporal redundancy (as further illustrated in FIG. 8), the classification (by the classifier 810) and the training of global network parameters (by the training unit 830) can be done with respect to views associated with multiple frames (e.g., of a GoP) of the volumetric video. Thus, in an aspect, in step 910, volumetric data associated with multiple frames of the volumetric video can be obtained. For each frame of these multiple frames, the volumetric data include views of the scene captured at a respective time by respective cameras. Next, in step 920, the views associated with the multiple frames are classified 810 into view-consistent regions and view-inconsistent regions. Then, for a subset of the view-consistent regions and for a subset of the view-inconsistent regions belonging to views associated with each frame of the multiple frames, the training 930 of the neural networks is performed based on respective regions, from the subset of the view-inconsistent regions, to determine the respective sets of network parameters. In addition, when global network parameters are used to initialize the sets of network parameters, these global network parameters are trained 830 using regions (of the view-consistent regions or of the view-inconsistent regions or of a combination thereof) belonging to views associated with the multiple frames.

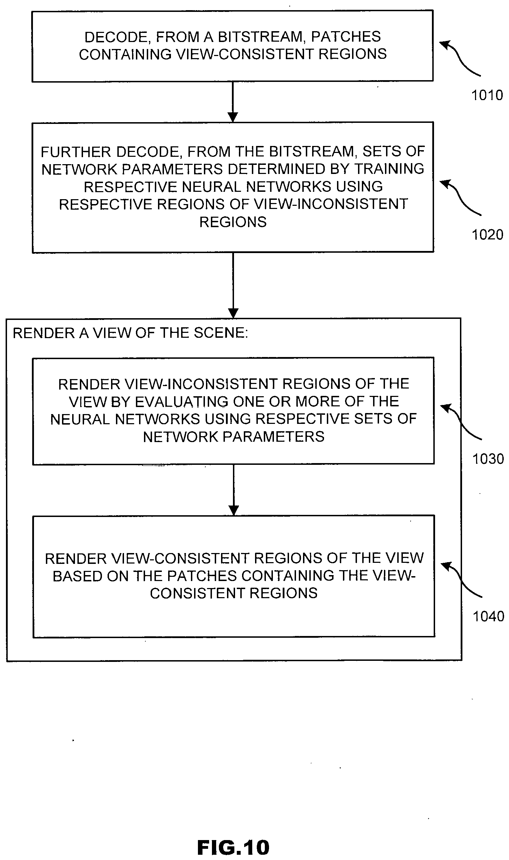

FIG. 10 is a flow diagram illustrating an example method for decoding, by a hybrid decoder, a volumetric video 1000, according to aspects of the present disclosure. The method 1000 begins, in step 1010, by decoding from a bitstream (e.g., by the MIV decoder 720) patches containing view-consistent regions, and, in step 1020, by further decoding from the bitstream (e.g., by the evaluator 740) sets of network parameters determined by training respective neural networks using respective regions, of view-inconsistent regions. The view-consistent regions and the view-inconsistent regions are regions of views of a scene captured by respective cameras (e.g., as demonstrated with respect to FIG. 2); these views are included in volumetric data associated with a frame of the volumetric video to be decoded.

In an aspect, syntax elements are decoded from the bitstream that indicate locations at the scene associated with the view-inconsistent regions. In another aspect, ancillary patches containing the view-inconsistent regions are decoded from the bitstream. These ancillary patches can be used to identify locations at the scene associated with the view-inconsistent regions. In yet another aspect, instead of decoding from the bitstream the sets of network parameters 1020, the method 1000 is applied to decode differences between respective parameters in 1) the sets of network parameters representing regions of views associated with the current frame of the volumetric video and in 2) sets of network parameters representing regions of views associated with the previous frame of the volumetric video.

The method 1000, in steps 1030-1040, can be applied to render a given view of the scene (e.g., by the renderer 750 in FIG. 7). The rendering includes rendering view-inconsistent regions of the given view by evaluating one or more of the neural networks using respective sets of network parameters (e.g., the rendering formulated in equations (1)-(3)). The rendering further includes rendering view-consistent regions of the given view based on the patches containing the view-consistent regions.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method for encoding a volumetric video, comprising:

   obtaining volumetric data associated with a frame of the volumetric video, the volumetric data include views of a scene captured by respective cameras;
   classifying the views into view-consistent regions and view-inconsistent regions;
   training neural networks using respective regions, of the view-inconsistent regions, the training determines respective sets of network parameters;
   encoding, into a bitstream, patches containing the view-consistent regions; and
   further encoding, into the bitstream, the sets of network parameters.

2. An apparatus for encoding a volumetric video, comprising:

   at least one processor; and
   memory storing instructions that, when executed by the at least one processor, cause the apparatus to:

   obtain volumetric data associated with a frame of the volumetric video, the volumetric data include views of a scene captured by respective cameras,
   classify the views into view-consistent regions and view-inconsistent regions,
   train neural networks using respective regions, of the view-inconsistent regions, the training determines respective sets of network parameters,
   encode, into a bitstream, patches containing the view-consistent regions, and further encode, into the bitstream, the sets of network parameters.

3. The method according to claim 1 or the apparatus according to claim 2, wherein the training of the neural networks comprises:
   initializing the sets of network parameters with global network parameters determined by training a global neural network using the view-consistent regions, or the view-inconsistent regions, or a combination thereof.

4. The method according to claim 1 or 3 or the apparatus according to claim 2 or 3, wherein the classifying comprises:
   classifying a pixel, from one of the views, as a view-inconsistent pixel if a difference between an attribute value of the pixel and an attribute value of a corresponding pixel, from another one of the views, is above a predetermined threshold.

5. The method according to any one of claims 1 and 3-4 further comprising or the apparatus according to any one of claims 2-4 wherein the instructions further cause the apparatus to perform:
encoding, into the bitstream, locations at the scene associated with the view-inconsistent regions.

6. The method according to any one of claims 1 and 3-4 further comprising or the apparatus according to any one of claims 2-4 wherein the instructions further cause the apparatus to perform:
encoding, into the bitstream, ancillary patches containing the view-inconsistent regions, wherein the ancillary patches are used to identify locations at the scene associated with the view-inconsistent regions.

7. The method according to any one of claims 1 and 3-6 further comprising or the apparatus according to any one of claims 2-6 wherein the instructions further cause the apparatus to perform:

preforming the obtaining, the classifying, the training, and the encoding with respect to a subsequent frame of the volumetric video, including determining of subsequent sets of network parameters, and
further encoding, into the bitstream, differences between respective parameters in the sets of network parameters and in the subsequent sets of network parameters.

8. The method according to any one of claims 1 and 3-7 or the apparatus according to any one of claims 2-7, wherein:

the obtaining comprises obtaining volumetric data associated with multiple frames of the volumetric video, wherein, for each of the multiple frames, the volumetric data include views of the scene captured by the respective cameras;
the classifying comprises classifying views, associated with the multiple frames, into the view-consistent regions and the view-inconsistent regions; and
for a subset of the view-consistent regions and a subset of the view-inconsistent regions belonging to views associated with a frame of the multiple frames, the training comprises training the neural networks using respective regions, of the subset of the view-inconsistent regions, to determine respective sets of network parameters.

9. The method according to any one of claims 1 and 3-8 or the apparatus according to any one of claims 2-8, wherein the training of the neural networks further comprises:
initializing the sets of network parameters with global network parameters determined by training a global neural network using the view-consistent regions, or the view-inconsistent regions, or a combination thereof.

10. The method according to any one of claims 1 and 3-9 further comprising or the apparatus according to any one of claims 2-9 wherein the instructions further cause the apparatus to perform:
partitioning the scene into volumetric partitions, wherein the respective regions, used to train the neural networks, are regions projected from respective partitions of the volumetric partitions.

11. A method for decoding a volumetric video, comprising:

decoding, from a bitstream, patches containing view-consistent regions;
further decoding, from the bitstream, sets of network parameters determined by training respective neural networks using respective regions, of view-inconsistent regions,
wherein the view-consistent regions and the view-inconsistent regions are regions of views of a scene captured by respective cameras, and wherein the views are included in volumetric data associated with a frame of the volumetric video; and
rendering a view of the scene, the rendering includes:

rendering view-inconsistent regions of the view by evaluating one or more of the neural networks using respective sets of the sets of network parameters, and
rendering view-consistent regions of the view based on the patches containing the view-consistent regions.

12. An apparatus for decoding a volumetric video, comprising:

at least one processor; and
memory storing instructions that, when executed by the at least one processor, cause the apparatus to:

decode, from a bitstream, patches containing view-consistent regions,
further decode, from the bitstream, sets of network parameters determined by training respective neural networks using respective regions, of view-inconsistent regions,
wherein the view-consistent regions and the view-inconsistent regions are regions of views of a scene captured by respective cameras, and wherein the views are included in volumetric data associated with a frame of the volumetric video, and
render a view of the scene, the rendering includes:

rendering view-inconsistent regions of the view by evaluating one or more of the neural networks using respective sets of the sets of network parameters, and
rendering view-consistent regions of the view based on the patches containing the view-consistent regions.

13. The method according to claim 11 further comprising or the apparatus according to claim 12 wherein the instructions further cause the apparatus to perform:
decoding, from the bitstream, syntax elements indicating locations at the scene associated with the view-inconsistent regions.

14. The method according to claim 11 further comprising or the apparatus according to claim 12 wherein the instructions further cause the apparatus to perform:
decoding, from the bitstream, ancillary patches containing the view-inconsistent regions, wherein the ancillary patches are used to identify locations at the scene associated with the view-inconsistent regions.

15. The method according to any one of claims 11 and 13-14 or the apparatus according to any one of claims 12-14, wherein the decoding of the sets of network parameters comprises:
decoding differences between respective parameters in the sets of network parameters and in sets of network parameters representing respective regions of view-inconsistent regions of views included in volumetric data associated with a previous frame of the volumetric video.

**FIG. 1**

**FIG. 2**

FIG. 3

**FIG. 4**

**FIG. 5**

EP 4 636 697 A1

**FIG. 6**

EP 4 636 697 A1

**FIG. 7**

**FIG. 8**

OBTAIN VOLUMETRIC DATA ASSOCIATED WITH A
FRAME OF A VOLUMETRIC VIDEO, THE VOLUMETRIC
DATA INCLUDE VIEWS OF A SCENE CAPTURED BY
RESPECTIVE CAMERAS

910

CLASSIFY THE VIEWS INTO VIEW-CONSISTENT
REGIONS AND VIEW-INCONSISTENT REGIONS

920

TRAIN NEURAL NETWORKS USING RESPECTIVE
REGIONS, OF THE VIEW-INCONSISTENT REGIONS,
THE TRAINING DETERMINES RESPECTIVE SETS OF
NETWORK PARAMETERS

930

ENCODE, INTO A BITSTREAM, PATCHES CONTAINING
THE VIEW-CONSISTENT REGIONS

940

FURTHER ENCODE, INTO THE BITSTREAM, THE SETS
OF NETWORK PARAMETERS

950

**FIG.9**

DECODE, FROM A BITSTREAM, PATCHES CONTAINING VIEW-CONSISTENT REGIONS

1010

FURTHER DECODE, FROM THE BITSTREAM, SETS OF NETWORK PARAMETERS DETERMINED BY TRAINING RESPECTIVE NEURAL NETWORKS USING RESPECTIVE REGIONS OF VIEW-INCONSISTENT REGIONS

1020

RENDER A VIEW OF THE SCENE:

RENDER VIEW-INCONSISTENT REGIONS OF THE VIEW BY EVALUATING ONE OR MORE OF THE NEURAL NETWORKS USING RESPECTIVE SETS OF NETWORK PARAMETERS

1030

RENDER VIEW-CONSISTENT REGIONS OF THE VIEW BASED ON THE PATCHES CONTAINING THE VIEW-CONSISTENT REGIONS

1040

**FIG.10**

Europäisches
Patentamt

European
Patent Office

Office européen
des brevets

# EUROPEAN SEARCH REPORT

**Application Number**

EP 24 31 5167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhu Chen ET AL: "Implicit-explicit Integrated Representations for Multi-view Video Compression", <br><br>, <br> 29 November 2023 (2023-11-29), pages 1-12, XP93199612, <br> Retrieved from the Internet: <br> URL:https://arxiv.org/pdf/2311.17350.pdf <br> [retrieved on 2024-08-28] <br> * pages 3-6; figure 2 * <br> ----- | 1-15 | INV. <br> G06T9/00 <br> H04N19/597 |
| A | WO 2022/224112 A1 (NOKIA TECHNOLOGIES OY [FI]) 27 October 2022 (2022-10-27) <br> * paragraphs [0098] - [0109] * <br> * paragraph [0118] * <br> ----- | 1-15 | |
| Y | WO 2022/214435 A1 (INTERDIGITAL CE PATENT HOLDINGS SAS [FR]) <br> 13 October 2022 (2022-10-13) <br> * page 25; figure 13 * <br> ----- | 1-15 | |
| Y | JUN YOUNG JEONG ET AL: "[INVR] EE 2.1 Results based on Instant-NGP and Different MIV CTC Contents", <br> 142. MPEG MEETING; 20230424 - 20230428; ANTALYA; (MOTION PICTURE EXPERT GROUP OR ISO/IEC JTC1/SC29/WG11), <br><br>, <br> no. m62980 <br> 17 April 2023 (2023-04-17), XP030309940, <br> Retrieved from the Internet: <br> URL:https://dms.mpeg.expert/doc_end_user/d ocuments/142_Antalya/wg11/m62980-v1-m62980 .zip m62980.pptx <br> [retrieved on 2023-04-17] <br> * pages 2-4 * <br> * pages 9, 16 * <br> ----- | 1-15 | TECHNICAL FIELDS SEARCHED (IPC) <br><br> G06T <br> H04N |

The present search report has been drawn up for all claims

| Place of search | Date of completion of the search | Examiner |
|---|---|---|
| Munich | 30 August 2024 | Di Cagno, Gianluca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 31 5167

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | | Publication date |
|---|---|---|---|---|
| WO 2022224112 A1 | 27-10-2022 | NONE | | |
| WO 2022214435 A1 | 13-10-2022 | CN | 117121059 A | 24-11-2023 |
| | | EP | 4320596 A1 | 14-02-2024 |
| | | JP | 2024514066 A | 28-03-2024 |
| | | US | 2024249462 A1 | 25-07-2024 |
| | | WO | 2022214435 A1 | 13-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306419

**Non-patent literature cited in the description**

- Information technology - Coded representation of immersive media - Part 12: MPEG immersive video. *ISO/IEC 23090-12:2023*
- **J. M. BOYCE et al.** MPEG Immersive Video Coding Standard. *Proceedings of the IEEE*, September 2021, vol. 109 (9), 1521-1536
- **J. FLEUREAU et al.** CE2.6-related: Non-Lambertian Light Effect Baking. *MPEG doc. m52415 ISO/IEC JTC1/SC29/WG*, 11 January 2020
- **D. NAIK et al.** Surface lightfield support in video-based point cloud Coding. *IEEE 22nd International Workshop on Multimedia Signal Processing*, September 2020, 1-6
- **B. MILDENHALL et al.** NeRF: representing scenes as neural radiance fields for view synthesis. *Communications of the ACM*, December 2021, vol. 65 (117), 99-106